**Europäisches Patentamt**

**European Patent Office**

**Office européen des brevets**

(11) Publication number: **0 076 921**
**B1**

(12) # EUROPEAN PATENT SPECIFICATION

(45) Date of publication of patent specification: **06.12.89**

(51) Int. Cl.⁴: **G 06 F 11/34**

(21) Application number: **82108074.4**

(22) Date of filing: **02.09.82**

(54) **Method and system for time measurements of data processing channels.**

(30) Priority: **13.10.81 PCt/us81/01373**

(43) Date of publication of application:
**20.04.83 Bulletin 83/16**

(45) Publication of the grant of the patent:
**06.12.89 Bulletin 89/49**

(84) Designated Contracting States:
**BE CH DE FR GB IT LI NL SE**

(56) References cited:
**US-A-3 771 144**
**US-A-3 818 458**
**COMPUTER, vol. 8, no. 11, November 1975,
pages 51-61, Long Beach, US; G.J. NUTT:
"Tutorial: Computer system monitors"
Idem**
**IBM TECHNICAL DISCLOSURE BULLETIN, vol.
19, no. 6, November 1976, pages 2197-2199,
New York, US; J.D. McNEILL et al.: "Network
analysis monitr"**

(73) Proprietor: **International Business Machines
Corporation
Old Orchard Road
Armonk, N.Y. 10504 (US)**

(72) Inventor: **Cormier, Roger Louis
Birch Drive
Pleasant Valley, N.Y. 12569 (US)**
Inventor: **Dugan, Robert James
11 Ledgewood Drive
Hyde Park, N.Y. 12538 (US)**
Inventor: **Guyette, Richard Roland
Rd. 6, Pleasant Hill Road
Hopewell Junction, N.Y. 12533 (US)**
Inventor: **Hankison, Ronald Lee
13 Kimball Drive
Poughkeepsie, N.Y. 12603 (US)**
Inventor: **Hao, Ming C.
5 Alta Drive
Chappaqua, N.Y. 10514 (US)**
Inventor: **Levin, Arthur Louis
North Avenue
Pleasant Valley, N.Y. 12569 (US)**
Inventor: **McClain, George Albert
622 Buntin Drive
Delray Beach Florida 33444 (US)**

Courier Press, Leamington Spa, England.

**EP 0 076 921 B1**

(72) Inventor: **Wanish, Paul John**
**28 Windmill Road**
**Poughkeepsie, N.Y. 12601 (US)**
Inventor: **Zeitler, Carl, Jr.**
**30 Cochran Hill Road**
**Poughkeepsie, N.Y. 12603 (US)**

(74) Representative: **Rudolph, Wolfgang, Dipl.-Ing.**
**IBM Deutschland GmbH Schönaicher Strasse**
**220**
**D-7030 Böblingen (DE)**

## Description

This invention relates to a channel measuring system according to the preamble of claim 1.

A central processor includes a main store and a computing engine or engines that execute system programs and user programs that are located in main store. A channel includes a channel store and a channel processor that handles I/O (input/output) operations of peripheral devices. The channel processor executes an I/O program that is located in main store and is made up of commands. To begin an I/O operation in response to a request by a user program or a system program, the system control program executes I/O instructions. For example, an I/O instruction and the associated protocol to start an I/O operation identifies a particular I/O device, a location in main store when the channel program is located, and a location in main store where the channel is to save or fetch data. In the data processing system that will be described later, the channel processor also performs operations relating to scheduling the I/O devices to handle particular tasks as the devices and associated data paths become available.

There are many useful applications for monitoring or measuring operations in a data processing system. As a familiar example, the time that a user of a system is connected to the central processor or other resources of the system commonly appears at the end of a print out. This information is useful in billing the user.

It is also known to measure operations of many different system components so that operating personnel can tell whether these components are being used effectively or in order to measure the operation of a program that these components execute. This information can be used to plan for expanding the system as components become overloaded or to reconfigure the system to better balance the use of the components. Measurement data can also be used dynamically to schedule tasks to be performed on particular components that happen to be less heavily used and to avoid data paths that are more heavily used.

A number of techniques have been suggested for making these measurements and some of these techniques are adapted to the method and apparatus of this invention. As a starting example that is not specifically relevant to this invention, it is conventional in a development laboratory and also in systems that have been installed at a users location to attach temporary probes to signal points or similarly to make permanent connections to lines that carry signals for operations that are to be monitored. Pulses on these lines can be counted or they can be used to start and stop timers.

As a more relevant example, processor and channel functions have been measured by programs that run on the central processor. The processor has a time of day clock and the measurement program accesses the time of day clock and keeps track of the starting times and the accumulated times for selected operations that can be signaled to the monitoring program. Such an application is described in "OS/VS2 MVS Resource Management Facility (RMF) General Information Manual", GC28-O921-2, available from International Business Machines Corporation, Armonk, New York 10504, USA.

Several other references relate to the general technique of monitoring an operation by means of special instructions that are located in the program that performs the operation. These instructions start a timer at a particular point in a program that is to be timed and stop the timer at a later point. Similarly, a counter can be incremented by instructions that are made part of a routine for an operation that is to be counted. Examples are described in IBM Technical Disclosure Bulletin, April 1968, pages 1700-1703, U. S. Patent 3 763 474, U. S. Patent 3 399 298, and U. S. Patent 3 034 353.

In the US-A-3 818 458 is described a method and apparatus for monitoring a general purpose digital computer which is intended for multiple channel I/O operation. This method and apparatus for monitoring the utilization and performance of a general purpose digital computer is without effecting operation of the computer itself, in which the monitor responds to a change, in the operative state of the computer to capture the contents of the certain status registers and locations in memory associated with a type of the state change which has been detected and which identifies the time at which such state change has occurred for analysis and time correlation by a data processor. The system includes first data collection means connected with a computer to register the occurrence of a state change exhibited thereby, second data collection means connected with a computer to register the address of a computer component associated in that state change, time stamping means connected with said first data collection means and responsive to the occurrence of said state change for registering the real time of occurrence thereof, and means connected with said first and second data collection means and said time stamping means for extracting registered data therefrom pertaining to state changes experienced by a particular computer component for enabling evaluation of computer performance.

In an article, "Tutorial: Computer System Monitors" in "Computer, November 1975, pages 51 to 61" is described a computer measurement. This document shows particularly that the clock may be a component of the hardware monitor itself, or the host system clock may be used. It is also stated, that software monitors must rely on the system-provided clock, thus it can introduce artifact if it accesses the clock frequently enough to prevent normal system functions from reading the block. Internal clocks are maintained by the system supervisor. The prior art shows no combination of two clocks and the related use during measurement.

In general, the object of the invention is to provide a new and improved channel measuring system, for measuring the time that is required for channel operations.

The solution of this object is described in the characterizing part of claim 1.

The apparatus of this invention are particularly adapted to perform measurements on a channel operation that is started by a machine language instruction called Start Subchannel. In this operations, the instruction and the associated protocol identify to the channel a subchannel and an associated I/O device and the main storage location of the channel program. This information is passed to the channel, and the channel then schedules the I/O operation in the same general way that the operation would otherwise be scheduled and dispatched by a control program in the central processor, and initial selection then takes place. For the measuring operation, the system includes a time of day clock that is synchronized with the time of day clock of the central processor. Means is provided in the I/O Supervisor program of the operating system of the central processor to read the time of day clock of the central processor and to store this value in a suitable location that is accessible to the channel.

Means is provided in the channel program that performs initial selection to read the time of day clock of the channel and to fetch the value of the time of day clock that was stored by the central processor and to calculate the time difference and to store this difference in a suitable location. This time is called Function Pending Time.

After Initial Selection the device typically disconnects from the channel and later reconnects and continues, typically with further disconnects, until the channel interrupts the cental processor to signal that the operation has been completed. This point in the channel operation is called Channel End (because the channel sets a status bit that is called Channel End). The accumulation of times during which the device is connected, is called device connect time. In the system of this invention the channel provides the device connect time in one form that is suitable for use such as billing the individual user of the subchannel and it accumulates this time in a second from that is suitable for use in manually or automatically planning or scheduling channel resources.

The system also provides means in the channel program for measuring the time between Start Subchannel and Channel End which is called Function Active Time. These measurements are useful directly and they can be used in combination to calculate other useful functions.

The channel has means in the routine for handling ending status to store Function Pending Time, Function Active Time and Device Connect Time in a Subchannel Measurement Block location in main store that is preassigned to the particular subchannel. (Device Connect Time is also stored separately in a Subchannel Status Word.)

The system also provides means including a new machine language instruction called Set Channel Monitor (SCHM) for enabling the monitor function. This instruction contains the starting address of the subchannel measurement blocks which the channel uses for storing the monitored time values. The channel has means for storing this address. When this address is all zeros (or any predetermined value that is never used as the starting address), the channel does not measure channel operations.

Means is also provided for selectively enabling or disabling the measurement function for each subchannel (when the measurement function is enabled by the Set Channel Monitor Instruction). A data block for each subchannel that is called the Subchannel Information Block contains a two bit field that identifies one of three modes of monitoring operations. (One of the four possible codes is not used.) In one mode, the monitor function is disabled for the subchannel. In another mode only conventional device connect time is measured and is stored in the Subchannel Status Word. In another mode all of the subchannel measurements that have been described are collected and stored.

The Subchannel Information Block is also arranged to store an address offset or displacement to the starting address in the instruction Set Channel Monitor. The channel program has means for adding the offset to the starting address for accessing the Subchannel Measurement Block.

Other objects and features of the invention will be apparent from the description of the preferred embodiment below, together with the appended drawings, in which:

Fig. 1 is a timing diagram of an I/O operation showing points at which times are recorded and the time intervals that are measured.

Fig. 2 shows the circuit of a clock that is used by the channel in recording times.

Figs. 3A-D show components of the channel and the interconnecting signals in a representative measurement operation.

Fig. 4 is a diagram showing the format in storage of the channel measurement parameters and the associated system of addresses to these storage locations.

The invention is preferably adapted to be used with a system in which a central processor operates with a single channel and in which each device has a separate subchannel (as is conventional). In this system, the processor starts an I/O operation by means of an instruction that is called Start Subchannel.

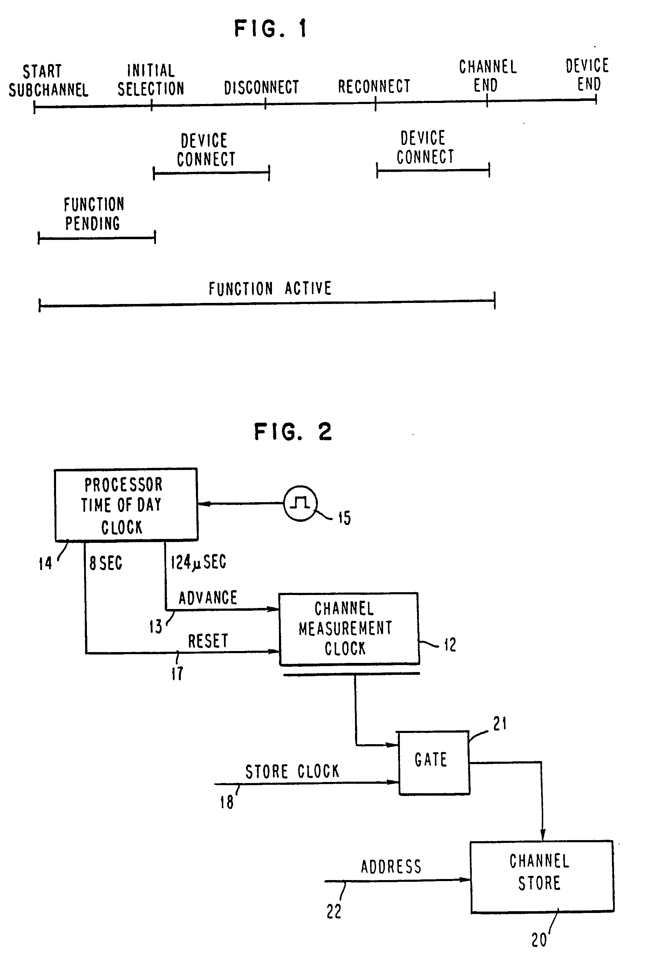

In the execution of this instruction, the channel is given the identification of the device and the address of the channel program in main store (both steps are conventional). The central processor is then free to branch to some independent operation. Fig. 1 shows Start Subchannel as one of the measurement points in the system of this invention.

The information in the instruction Start Subchannel is put onto a queue in channel storage (sometimes called bump storage) and the channel schedules the resources that are required to establish the data path of the subchannel in the same general way that other tasks are scheduled by a processor. At a point in this operation the channel contacts the device controller in a conventional process that is called Initial Selection. Fig. 1 shows this point called Successful Initial Selection. The time from Start Subchannel to Successful Initial Selection is called Function Pending time.

Function Pending Time is useful because it may be long for some devices that are heavily used and shorter for other devices that are less heavily used. For example, a number of disks or other similar devices may provide a pool of storage space that the system control program allocates temporarily to programs of users. This measurement is useful in allocating storage space from devices that currently have shorter times for function pending.

When successful Initial Selection has been made, the channel executes the first command. In the example of the operation of a magnetic disk, this command tells the disk controller to position the disk head at a particular track for a read or write operation. This mechanical operation is relatively slow, and the device controller is ordinarily programmed to disconnect from the channel for this operation. This point in Fig. 1 is indicated by the legend Disconnect. When the device is ready to execute a command of the channel program, it reconnects. Typically a device disconnects and reconnects several times after Start Subchannel and Fig. 1 shows two representative Device Connect times. Device Connect time is commonly measured for each user. As will be explained later, the system of the drawing provides this function on a user basis and also provides accumulated connect time for an individual device.

Fig. 1 also shows Channel End and Device End which are conventional points in an I/O operation. The time from Start Subchannel to Channel End is measured by the apparatus of this invention and is called Function Active time. Function Pending, Function Active and Device Connect times are each useful individually, and in addition they can be combined to calculate other times.

The channel is provided with a clock 12 that is used in the measurement operations of this invention. The clock conventionally comprises a number of counter stages that are connected to be incremented by a stepping or advance pulse that appears periodically on a line 13 at intervals that correspond to the resolution that is desired in the channel measurements.

The channel clock 12 is synchronized with the time of day clock 14 of the associated processor. The system time of day clock can be read by an instruction called Store Clock (STCK) which includes an address of a sixty-four bit location in main store where the current value of the time of day clock is to be stored. This is described in "IBM System/370 Principles of Operation", pages 141, 142, available under GA 22-7000 from International Business Machines Corporation, Armonk, New York 10504, USA. This clock also has a number of counter stages and an oscillator 15 that steps the counter in increments that represent units of time. One stage of the counter is selected as appropriate to the degree of resolution that is desired in the channel measurements, and in the preferred system this interval is one hundred twenty-four microseconds. Line 13 connects the one hundred twenty-four microsecond output of the system time of day clock to the advance input of the channel clock.

Another time signal of the system time of day clock is connected by a line 17 to form a reset for the channel clock. This time unit is eight seconds in the preferred system. This reset from the system time of day clock keeps the channel clock identical to the corresponding stages of the system time of day clock (after an initial reset operation) so that an operation can be timed partly from the system time of day clock and partly from the channel clock. This reset connection also synchronizes the clocks of different channels that are part of a multi-processor system because the time of day clocks of the different processor systems are independently synchronized. There is one channel for each processor system and a processor system has one or more processors (not shown) that operate under a common control program.

Eight seconds are conveniently represented by a sixteen bit value and it is long enough to include virtually any possible I/O operation that is to be measured.

The channel clock is arranged to be read by an instruction or a micro-instruction of the channel processor and the clock value is stored in the channel store at a location that is specified in the instruction. This structure is similar to the structure of the system time of day clock and is illustrated in Fig. 2 by a signal Store Clock on a line 18, the channel store 20 and a system of gates 21 that transfers the channel clock value to a channel store location designated by an address on a line 22 from the instruction decoder.

This series of figures shows the components of the channel that measure Device Connect time which is a convenient example of all of the measurement operations. The operations of the channel store 20 the control store 25 and the arithmetic and logic unit (ALU) 26 will be familiar from standard operations of these components.

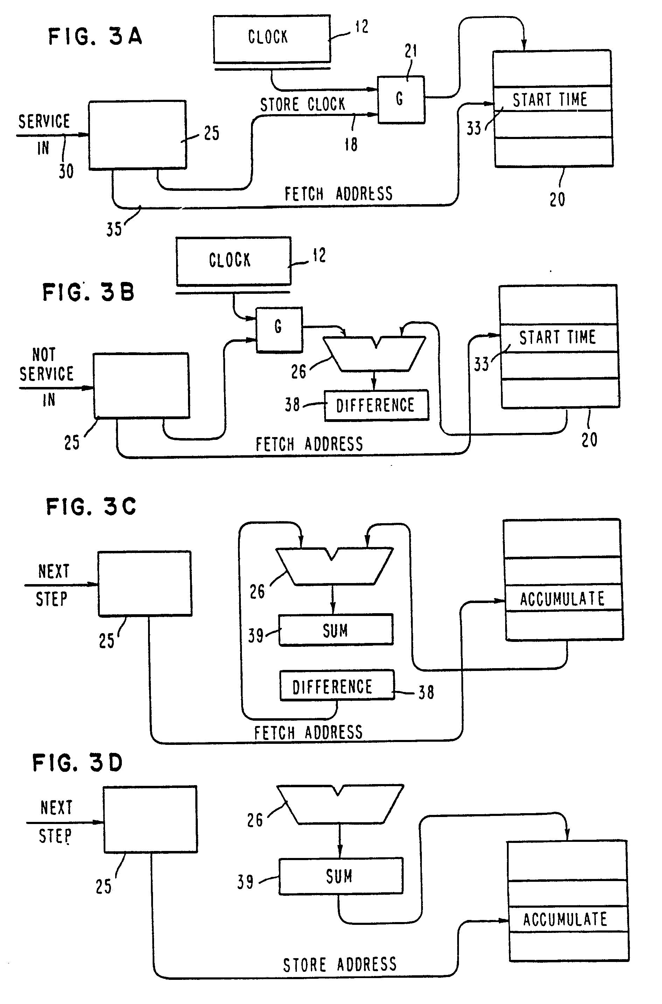

In Fig. 3A, initial selection has been made and is signaled by a device on a tag line 30 called Service In. This signal causes the channel to execute a microprogram that is located in control store 25. This otherwise conventional microprogram includes instruction means for reading the channel clock 12 and loading its current value into a predetermined location 33, arbitrarily called Start Time, in channel store 20. The address of this storage location and a field calling for a store operation are carried in the microcode instructions as is conventional and as line 35 in the drawing represents. The microcode also supplies the signal Store Clock on line 18.

Thus, at an appropriate point in the usual routine associated with device reconnect, the channel time is stored. Since the speed of the channel processor is very fast in relation to the resolution of the channel clock, it will ordinarily make little difference where this measurement operation is located in the routine for handling Service In.

The fall of Service In conventionally signals device disconnect and causes the channel to begin a routine to respond to this condition. In the method and apparatus of Figs. 3B, C and D, this conventional routine contains microinstruction means for reading the channel clock, subtracting the value from the value stored in Fig. 3A, and storing the difference in a predetermined location of channel store that is called Accumulate. The drawing is representative of various ways in which this operation can be performed.

In the step illustrated by Fig. 3B, a microinstruction or a series of microinstructions read the channel clock and apply the clock value at one input of ALU 26 and also fetch from channel store 20 the clock value stored in the operation of Fig. 3A and apply this value to the other input of ALU 26 and also control ALU 26 to perform a subtraction and to load the difference into a register 38 or an equivalant location in channel store 20.

Fig. 3C is a continuation of this operation, as the signal Next Step to the control store signifies. In this operation the channel store is accessed at the location Accumulate which holds the accumulated time for any previous connect/disconnect sequence. This value and the difference in register 38 are summed and stored in a location 39. As the operation of the channel continues in Fig. 3D, the sum in register 39 is stored in the accumulator location in channel store. As the device continues to reconnect and disconnect, the operations of Fig. 3A through 3D are repeated and the device connect time accumulates in the Accumulate location.

Notice that the channel clock may be reset between the step of Fig. 3A and the step of Fig. 3B so that the difference in register 38 is a negative value. In this situation, the reset value of the channel clock (eight seconds in the specific example) is added to the negative value. The conventional techniques for testing for a negative value and either adding or not adding the eight seconds will be readily understood without a specific example.

From the detailed example of the operation for device reconnect and device disconnect, the method and apparatus for the measurements at the other points in Fig. 1 can be understood from only a brief description. Start Subchannel time is recorded by the central processor by conventional instructions in the routine that executes Start Subchannel. The time of day clock can be stored in any convenient location that is accessible to the central processor and to the channel, such as a location in main store that is otherwise assigned to the operating system or to a location in channel store. This operation of the central processor can be thought of as a counterpart of the operation shown in Fig. 3A. (Note that this routine is performed only by the control program of the central processor and not by user programs.) Successful initial selection is signaled by the rise of Service In, and the related channel routine includes means for reading the channel clock and subtracting from it the time of Start Subchannel in the way that has been described for any device connect time in relation to Figs. 3B, C and D.

Channel End is signaled to the channel by the device and in response to this signal the channel reads the channel clock and calculates Function Active time in the way that has been described for Function Pending time. The channel also updates the device connect time as already described.

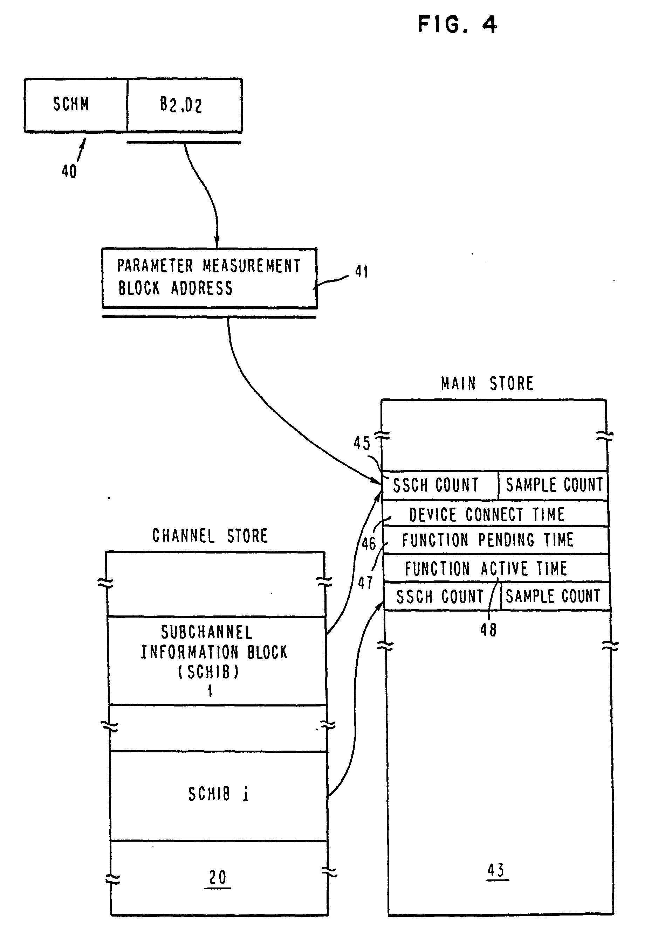

Subchannel measurement operations take place when the central processor executes an I/O instruction called Set Channel Monitor (SCHM). As block 40 in Fig. 4 shows, the instruction has the familiar format of a sixteen bit field for the operation code and a sixteen bit field for an address in the form of a base B2 and a displacement D2. When the instruction is executed by the central processor, the channel stores the address as represented by block 41. This address (if it is not all zeros) points to a location in the central processor main store 43 where the measurement data is to be stored for each subchannel that is to be measured.

Fig. 4 shows the format for storing the measurement parameters. Each subchannel has four word locations (of thirty-two bits each) 45, 46, 47 and 48 for the measurement parameters. Each channel also has an extended measurement area of four additional words (not shown) for additional measurement parameters that may be desirable. When the measurement parameters have been loaded into main storage, they are accessible to a program such as RMF that would print them in a format useful in the operation and organization of the data processing system. The parameters can also be used by a program that allocates system resources as has already been described.

In channel store 20 the channel maintains a block for each subchannel that is called the Subchannel Information Block (SCHIB). This block includes an address offset that is combined with the address in register 41 to point to the measurement block for the particular subchannel. Addressing of this kind is widely used and does not require detailed explanation. The SCHIB's can be assigned to any convenient location in channel store 20.

The channel also maintains a Subchannel Status word (not shown) for each subchannel which contains for example the Channel Command Word Address and is generally similar to a Channel Status Word. Device Connect time is also stored in this status word.

When the address field of the instruction Set Channel Monitor is set to all zeros, the measurement operation is inhibited. Thus the instruction can be thought of as having one form to enable measurement and a second form to disable measurement. In the channel hardware the measurement is enabled by a latch that is set by this address and reset by the all zeros address or equivalently by a corresponding bit that is set in a control word of the channel engine. The microprogram routines that have been described in relation to Fig. 4 include instructions to test this status and to execute the measurement instructions or to branch around them according to the condition established by Set Channel Monitor. In the operating system, routines that include Set Channel Monitor and associated routines that set up the SCHIB's are enabled or disabled for a particular measurement in the same way that the operating system is selectively controlled to provide or not to provide available functions.

Means is also provided for disabling an individual subchannel for measurement or for enabling one of two measurement modes. This condition for a subchannel is controlled by a two bit field in its SCHIB and this field is tested by the techniques described for Set Channel Monitor. In one mode, the subchannel is enabled for the measurements that are shown in main store 43 in Fig. 4 and for reporting device connect time in the Subchannel Status Word. In another mode, only the device connect time of the Subchannel Status Word is measured.

As part of the normal operation of the channel at Channel End, the channel includes microprogram means to store device connect time, Function pending time, and Function Active time, (according to the mode set in the SCHIB and whether the channel is enabled for measurement). In addition the channel fetches, increments and restores the Sample Count and the SSCH count shown in Fig. 4.

SSCH count is incremented in either active measurement mode, whenever Device Connect time is stored. Sample Count is stored only when Function Active and Function Pending are also stored. The conditions of the microcode will be apparent without detailed explanation.

The hardware of the channel and the central processor correspond specifically to the IBM 3081 but the channel clock of this invention and its connection to the conventional processor clock is applicable to various processor and channel designs. This processor has a single channel, but the invention is applicable to systems that conceptually have more than one channel. Other aspects of the invention have been illustrated by the incorporation of new microcode routines in the otherwise normal microprograms of the channel. In some applications of the invention it may be desirable to start and/or stop the timings from tag lines that signal the occurrence of the operation as is often done with monitors that separately attach to components of a data processing system. The actual microprograms can be implemented in various ways. Thus, those skilled in the art will recognize many applications for this invention and appropriate variations within the spirit of the invention and the scope of the claims.

## Claims

1. A channel measuring system comprising, a central processor having a time of day clock (14) comprising a number of counter stages and a plurality of channels, characterized in that

each channel has a resettable channel clock (12) and a channel store (20), and in that there are provided means (13) connecting a stage of the central processor time of day clock to increment the channel clock at intervals defining the resolution of the measuring system,

means (17) connecting a stage of the central processor time of day clock to reset the channel clock at intervals corresponding to the longest channel operations to be monitored, whereby after an initial reset operation the channel clock is comparable with corresponding stages of the central processor time of day clock,

means (18, 21) in the central processor for storing the value of the system time of day clock in a predetermined location (33) of the channel store (20),

means (25) in the channel for accessing the channel clock (12) at a predetermined point in said channel operation, and

means (26, 38) in the channel for subtracting the stored value of the central processor time of day clock (14) from the value of the channel clock (12) and calculating the time interval from the time when the central processor starts the channel operation to the time when the channel reaches the predetermined points in its operations, whereby channel measurement operations are performed.

2. Channel measuring system of claim 1, wherein said central processor includes means for executing an instruction selectively enabling or disabling channel measurement operations.

3. Channel measuring system of claim 2, wherein said channel includes means for storing said time in a location in a main store and said instruction includes a pointer to the address of this location.

4. Channel measuring system of claim 3, wherein said channel includes means responsive to a predetermined address in said instruction to disable said channel measurement operations.

5. Channel measuring system of claim 4, wherein said channel includes an information block for each subchannel, said central processor includes means for loading an address offset into an information block, and said channel includes means for storing measurement parameters for a subchannel in the location in main store defined in said instruction and said subchannel information block.

6. Channel measuring system of claim 5, wherein the central processor includes means for loading into the subchannel information block a field defining a particular mode of measurement or disabling measurement for the subchannel, and wherein said channel includes means responsive to said mode for measuring parameters on the basis of a particular user of the system and/or the basis of a particular subchannel, in particular, storing parameters measured on the basis of a particular user as part of a subchannel status word.

7. Channel measuring system of claim 1, wherein said means for accessing said channel clock (12) at a predetermined point includes means for accessing said channel clock at successful Initial Selection and at Channel End and wherein said means for calculating the time interval includes means (26) for calculating the time from starting the subchannel operation to successful Initial Selection (Function Pending Time) and the time from starting the subchannel operation to Channel End (Function Active Time).

8. Channel measuring system of claim 7, wherein said means for accessing said channel clock (12) at a predetermined point includes means for accessing the clock at Device Connect and Device Disconnect times and wherein said channel means for calculating the time interval includes means for calculating the interval between a Device Connect and the next Device Disconnect and for accumulating device connect time for a subchannel operation.

9. Channel measuring system of claim 8, wherein said channel includes means for storing device connect time in a first location (parameter measurement block) and a second location (subchannel status word) and wherein said central processor includes means for accessing said first location and calculating the usage of the associated subchannel without regard to particular user programs and for accessing the second location and calculating the use of I/O resources by a particular user program.

**Patentansprüche**

1. Kanalmeßsystem mit einem Zentralprozessor mit einer Tageszeituhr (14), welche eine Anzahl von Zählerstufen und mehrere Kanäle aufweist, dadurch gekennzeichnet, daß

jeder Kanal eine rückstellbare Kanaluhr (12) und einen Kanalspeicher (20) aufweist, und daß Mittel (13) zum Anschließen einer Stufe der Tageszeituhr des Zentralprozessors vorgesehen sind, um die Kanaluhr in Zeitintervallen weiterzuschalten, welche die Auflösung des Meßsystems definieren,

Mittel (17) zum Anschließen einer Stufe der Tageszeituhr des Zentralprozessors zum Rückstellen der Kanaluhr in Zeitinervallen, welche den längsten zu überwachenden Kanalvorgängen entsprechen, wodurch nach einem anfänglichen Rückstellvorgang die Kanaluhr entsprechenden Stufen der Tageszeituhr des Zentralprozessors vergleichbar ist,

Mittel (18, 21) im Zentralprozessor zum Speichern des Wertes der Tageszeituhr des Systems in einer bestimmten Position (33) des Kanalspeichers (20),

Mittel (25) im Kanal zum Zugreifen auf die Kanaluhr (12) zu einem bestimmten Zeitpunkt im Kanalbetrieb, und

Mittel (26, 38) im Kanal zum Abziehen des gespeicherten Wertes der Tageszeituhr (14) des Zentralprozessors vom Wert der Kanaluhr (12), und Berechnen des Zeitintervalls von dem Zeitpunkt, an welchem der Zentralprozessor den Kanalbetrieb startet, bis zu der Zeit, an welcher der Kanal die bestimmten Punkte in seinem Betrieb erreicht hat, wodurch Kanalmeßvorgänge ausgeführt werden.

2. Kanalmeßsystem nach Anspruch 1, bei welchem der Zentralprozessor Mittel zum Ausführen eines Befehls aufweist, welcher die Kanalmeßvorgänge selektiv freigibt oder sperrt.

3. Kanalmeßsystem nach Anspruch 2, bei welchem der Kanal Mittel zum Speichern der Zeit in einer Position des Hauptspeichers umfaßt und der Befehl einen Zeiger zur Adresse dieser Position enthält.

4. Kanalmeßsystem nach Anspruch 3, bei welchem der Kanal Mittel aufweist, die auf eine bestimmte Adresse im Befehl ansprechen und den Kanalmeßvorgang stoppen.

5. Kanalmeßsystem nach Anspruch 4, bei welchem der Kanal einen Informationsblock für jeden Unterkanal aufweist, und wobei der Zentralprozessor Mittel zum Laden einer in einen Informationsblock versetzten Adresse umfaßt, und wobei der Kanal Mittel zum Speichern von Meßparametern für einen Unterkanal in der Position im Hauptspeichers aufweist, die im Befehl und im Informationsblock des Unterkanals definiert ist.

6. Kanalmeßsystem nach Anspruch 5, bei welchem der Zentralprozessor Mittel aufweist, mit denen ein Feld in den Informationsblock des Unterkanals geladen wird, welches einen speziellen Meßmodus definiert oder das Meßen für den Unterkanal sperrt, und wobei der Kanal Mittel aufweist, welche auf diesen Modus für Meßparameter auf der Basis eines bestimmten Anwenders des Systems und/oder der Basis eines bestimmten Unterkanals ansprechen, insbesondere zum Speichern von auf der Basis eines bestimmten Anwenders als Teil eines Unterkanalstatuswortes gemeßenen Parametern.

7. Kanalmeßsystem nach Anspruch 1, bei welchem die Mittel zum Zugriff auf die Kanaluhr (12) zu einem bestimmten Zeitpunkt Mittel zum Zugriff auf die Kanaluhr bei erfolgreicher Initialselektion und bei Kanalende aufweisen, und bei welchem die Mittel zum Berechnen des Zeitintervalls Mittel (26) zum Berechnen der Zeit vom Starten des Unterkanalvorgangs zur erfolgreichen Initialselektion (Funktion anstehende Zeit) und der Zeit vom Starten des Unterkanalvorgangs bis zum Kanalende (Funktion aktive Zeit) einschließen.

8. Kanalmeßsystem nach Anspruch 7, bei welchem die Mittel zum Zugriff auf die Kanaluhr (12) zu einem bestimmten Zeitpunkt Mittel zum Zugriff auf die Uhr bei Geräteeinheit Verbinden und Geräteeinheit Abschalten aufweist, und bei welchem die Kanalmittel zum Berechnen des Zeitintervalls Mittel zum Berechnen des Intervalls zwischen Geräteeinheit Verbinden und dem nächsten Geräteeinheit Abschalten sowie zum Ansammeln von Geräteeinheitverbindungszeit für den Betrieb eines Unterkanals einschließen.

9. Kanalmeßsystem nach Anspruch 8, bei welchem der Kanal Mittel zum Speichern von Geräteeinheitsverbindungszeit in einer ersten Position (Parametermeßblock) und einer zweiten Position (Unterkanalstatuswort) aufweist, und bei welchem der Zentralprozessor Mittel zum Zugriff auf die erste Position und zum Berechnen der Anwendung des zugeordneten Unterkanals aufweist unabhängig von bestimmten Anwenderprogrammen, und zum Zugriff auf die zweite Position sowie zum Berechnen der Anwendung von E/A-Mitteln durch ein bestimmtes Anwenderprogramm.

**Revendications**

1. Système de mesure de canaux comprenant un processeur central ayant une horloge à l'heure du jour (14) comprenant plusieurs étages de comptage et une pluralité de canaux, caractérisé en ce que:

chaque canal a une horloge de canal (12) que l'on peut remettre à jour et une mémoire de canal (20),

et en ce qu'il est prévu:

des moyens (13) connectés à un étage de l'horloge à l'heure du jour du processeur central pour incrémenter l'horloge de canal à des intervalles définissant la résolution du système de mesure,

des moyens (17) connectés à un étage de l'horloge à l'heure du jour du processeur central pour remettre à jour l'horloge de canal à des intervalles correspondant aux opérations de canal les plus longues à contrôler, d'où il résulte qu'après une opération de remise à jour initiale l'horloge de canal peut être comparée à des étages correspondants de l'horloge à l'heure du jour du processeur central,

des moyens (18, 21) dans le processeur central pour mémoriser la valeur de l'horloge à l'heure du jour du système dans un emplacement prédéterminé (33) de la mémoire de canal (20),

des moyens (25) dans le canal pour accéder à l'horloge de canal (12) à un stade prédéterminé dans ladite opération de canal, et

des moyens (26, 38) dans le canal pour soustraire la valeur mémorisée de l'horloge à l'heure du jour (14) du processeur central de la valeur de l'horloge de canal (12) et pour calculer l'intervalle de temps à partir de l'instant auquel le processeur central commence l'opération de canal jusqu'à l'instant auquel le canal atteint les stades prédéterminés dans ses opérations, d'où il résulte que les opérations de mesure de canaux sont réalisées.

2. Système de mesure de canaux selon la revendication 1, dans lequel le processeur central comprend des moyens pour exécuter une instruction qui valide ou invalide de manière sélective les opérations de mesure de canaux.

3. Système de mesure de canaux selon la revendication 2, dans lequel ledit canal comprend des moyens pour mémoriser ledit temps dans un emplacement d'une mémoire principale et dans lequel ladite instruction comprend un pointeur vers l'adresse de cet emplacement.

4. Système de mesure de canaux selon la revendication 3, dans lequel ledit canal comprend des moyens agissant en réponse à une adresse prédéterminée dans ladite instruction pour invalider les opérations de mesure de canaux.

5. Système de mesure de canaux selon la revendication 4, dans lequel ledit canal comprend un bloc d'information pour chaque sous-canal, dans lequel le processeur central comprend des moyens pour charger un décalage d'adresse dans un bloc d'information, et dans lequel ledit canal comprend des moyens pour mémoriser des paramètres de mesure pour un sous-canal dans l'emplacement de la mémoire principale défini dans ladite instruction et ledit bloc d'information de sous-canal.

6. Système de mesure de canaux selon la revendication 5, dans lequel le processeur central comprend des moyens pour charger dans le bloc d'information de sous-canal un champ définissant un mode particulier de mesure ou invalider une mesure pour le sous-canal, et dans lequel ledit canal comprend des moyens agissant en réponse audit mode pour mesurer des paramètres sur la base d'un utilisateur particulier du système et/ou sur la base d'un sous-canal particulier, en particulier, pour mémoriser des paramètres mesurés sur la base d'un utilisateur particulier en tant que partie d'un mot d'état de sous-canal.

7. Système de mesure de canaux selon la revendication 1, dans lequel lesdits moyens pour accéder à l'horloge de canal (12) à un stade prédéterminé comprennent des moyens pour accéder à l'horloge de canal au niveau d'une Sélection Initiale réussie et au niveau d'une Fin Canal et dans lequel lesdits moyens pour calculer l'intervalle de temps comprennent des moyens (26) pour calculer le temps à partir du début de l'opération d'un sous-canal jusqu'à la Sélection Initiale réussie (Temps d'Attente de Fonction) et le temps à partir du début de l'opération d'un sous-canal jusqu'à la Fin Canal (Temps d'Activité de Fonction).

8. Système de mesure de canaux selon la revendication 7, dans lequel lesdits moyens pour accéder à l'horloge de canal (12) à un stade prédéterminé comprennent des moyens pour accéder à l'horloge en des temps de Connexion de Dispositif et de Déconnexion de Dispositif et dans lequel lesdits moyens de canal pour calculer l'intervalle de temps comprennent des moyens pour calculer l'intervalle entre une Connexion de Dispositif et la Déconnexion de Dispositif suivante, et pour accumuler le temps de connexion de dispositif pour une opération de sous-canal.

9. Système de mesure de canaux selon la revendication 8, dans lequel ledit canal comprend des moyens pour mémoriser le temps de connexion de dispositif dans un premier emplacement (bloc de mesure de paramètres) et un deuxième emplacement (mot d'état de sous-canal) et dans lequel le processeur central comprend des moyens pour accéder au premier emplacement et pour calculer l'utilisation du sous-canal associé sans considérer des programmes d'utilisateurs particuliers et pour accéder au deuxième emplacement et calculer l'utilisation de ressources E/S par un programme d'utilisateurs particulier.

## FIG. 1

## FIG. 2

FIG. 3A

CLOCK — 12

21

SERVICE IN — 30

25

STORE CLOCK

G

18

START TIME

33

FETCH ADDRESS

35

20

FIG. 3B

CLOCK — 12

G

NOT SERVICE IN

26

START TIME

38 — DIFFERENCE

33

25

FETCH ADDRESS

20

FIG. 3C

NEXT STEP

26

ACCUMULATE

39 — SUM

DIFFERENCE — 38

25

FETCH ADDRESS

FIG. 3D

NEXT STEP

26

39 — SUM

25

ACCUMULATE

STORE ADDRESS

2

FIG. 4

| SCHM | B2.D2 |
|------|-------|

40

PARAMETER MEASUREMENT
BLOCK ADDRESS — 41

MAIN STORE

CHANNEL STORE

| SUBCHANNEL INFORMATION BLOCK (SCHIB) 1 |
|---|

| SCHIB i |
|---|

20

45

| SSCH COUNT | SAMPLE COUNT |
|------------|--------------|
| DEVICE CONNECT TIME | |
| FUNCTION PENDING TIME | |
| FUNCTION ACTIVE TIME | |
| SSCH COUNT | SAMPLE COUNT |

46

47

48

43